# EUROPÄISCHE PATENTANMELDUNG

(11) **EP 1 927 822 A1**
(43) Veröffentlichungstag der Anmeldung: **04.06.2008**
(21) Anmeldenummer: 07022249.2
(22) Anmeldetag: 16.11.2007
(51) Int. Cl.: G01C 21/30, F16H 61/02, B60W 30/16, B60Q 1/08, F16H 59/66, B60W 40/06, B60K 31/00

(54) **Verfahren zur Steuerung einer Betriebs- oder Funktionskomponente eines Kraftfahrzeugs anhand von über ein Navigationssystem ermittelten Positionsdaten**

(30) Priorität: 01.12.2006 DE 102006056761
(71) Anmelder: AUDI AG, 85045 Ingolstadt (DE)
(72) Erfinder: Kischkat, Ralf, Dr., 85057 Ingolstadt (DE)
(74) Vertreter: Thielmann, Frank

(57) **Zusammenfassung**

Verfahren zur Steuerung einer Betriebs- oder Funktionskomponente eines Kraftfahrzeugs anhand von über ein Navigationssystem ermittelten Navigationsdaten umfassend Positionsdaten, wobei bei nicht möglicher Ermittlung aktueller Positionsdaten über Satelliteninformationssignale anhand der zuletzt ermittelten Positionsdaten und anhand von Betriebsparametern des Kraftfahrzeugs und/oder früheren Satelliteninformationssignalen ermittelten Trajektoriedaten rechnerisch Positionsdaten ermittelt werden, die mit vorhandenen, den Straßenverlauf beschreibenden Wegstreckendaten die Übereinstimmung der Daten qualifizierend verglichen werden, wobei die Steuerung der Betriebs- oder Funktionskomponente in Abhängigkeit des qualifizierenden Übereinstimmungsvergleichs erfolgt.

## Beschreibung

Die Erfindung betrifft ein Verfahren zur Steuerung einer Betriebs- oder Funktionskomponente eines Kraftfahrzeugs anhand von über ein Navigationssystem ermittelten Positionsdaten.

Die meisten modernen Fahrzeuge verfügen über ein integriertes Navigationssystem, das die Bestimmung von die aktuelle Ist-Position des Fahrzeugs exakt beschreibenden Positionsdaten zulässt. Ein solches Navigationssystem kommuniziert hierbei mit mehreren, üblicherweise mindestens drei Satelliten, was die exakte Positionsbestimmung ermöglicht. Die ermittelten Positionsdaten werden nicht nur zur Wegführung genutzt und dem Fahrer angezeigt, vielmehr ist es auch bekannt, die während des Fahrbetriebs ermittelten Positionsdaten auch an eine oder mehrere Betriebs- oder Funktionskomponenten des Kraftfahrzeugs zu übertragen, die diese verwerten bzw. deren Betrieb in Abhängigkeit der Positionsdaten gesteuert werden kann. Zu nennen ist hierbei das Automatikgetriebe eines Kraftfahrzeugs, dessen Schaltbetrieb in Abhängigkeit der Ist-Positionsdaten gesteuert und damit die Fahrstrategie des Kraftfahrzeugs verbessert werden kann. Hierunter versteht man insbesondere die Optimierung der Schaltpunktsteuerung in Abhängigkeit der ermittelten Ist-Positionsdaten, das heißt, wann in welcher Übersetzung gefahren wird. Denn die übertragenen Navigationsdaten umfassen üblicherweise nicht nur die ermittelten Positionsdaten, sondern auch Daten betreffend den voraussichtlichen Straßenverlauf wie sich nähernde Kurven, den Abstand zu einer sich nähernden Kurve, den Höhenverlauf der folgenden Fahrstrecke etc., sowie gegebenenfalls weitere Attribute wie Geschwindigkeitsbegrenzungen auf der befahrenen Strecke, etwaige Kreuzungen oder Einmündungen etc. All diese Informationen können entweder aus dem dem Navigationssystem zugrunde liegenden Datensatz (üblicherweise eine CD oder DVD mit entsprechenden Daten, die der Positionsbestimmung wie auch der Ermittlung etwaiger zusätzlicher Daten dient) entnommen werden. Alternativ oder zusätzlich können aber auch andere Signale anderer Sensoren wie z. B. Kamerasysteme, die das Fahrzeugvorfeld erfassen und beispielsweise die Ermittlung der Fahrstrecke oder etwaige Geschwindigkeitsbegrenzungen etc. ermöglichen, herangezogen oder zur Verifizierung von Daten aus dem Datensatz verwendet werden. Grundsätzlich können auch andere Systeme wie beispielsweise ein Abstandshaltesystem (ACC-System (ACC = Adaptive Cruise Control)) oder ein richtungsgesteuertes Frontlicht etc. anhand der gegebenen Navigationsdaten gesteuert werden.

Die Ermittlung der Navigationsdaten und unter diesen der Positionsdaten erfolgt jeweils dann sehr exakt, wenn wie beschrieben die Kommunikation des Navigationssystems mit der Mindestanzahl der benötigten Satelliten gegeben ist. Mitunter kann es aber vorkommen, dass nur eine unzureichende Anzahl von Satelliten zur Positionsbestimmung geortet werden kann, beispielsweise infolge einer Abschattung durch Felsen oder einer Tunneldurchfahrt etc. Das heißt, eine aktuelle Positionsdatenermittlung ist in diesem Fall nicht möglich. In solchen Fällen besteht die Möglichkeit, aus dem Lenkwinkel und der Raddrehzahl und den letzten bekannten Positionsdaten die momentane Position rechnerisch zu ermitteln, mithin also letztlich rechnerisch die aktuellen Positionsdaten abzuschätzen. Dies ist naturgemäß fehlerbehaftet, beispielsweise durch ungenaue Erfassung des Lenkwinkels oder der Raddrehzahl oder unterschiedlichen unbekannten Reifendruck etc. Das heißt, selbst wenn es gelingt, rechnerisch die aktuellen Positionsdaten zu bestimmen, sind diese mitunter fehlerbehaftet. Anhand dieser rechnerisch ermittelten Positionsdaten kann nun unter Verwendung von Wegstreckendaten aus dem CD- oder DVD-Datensatz, also dem "Kartenmaterial" mit den vorhandenen Straßen und den rechnerisch ermittelten Positionsdaten bzw. der daraus ermittelten Trajektorie der Fahrzeugbewegung bestimmt werden, auf welcher Straße sich das Fahrzeug gerade befindet. Auch das verwendete Kartenmaterial kann ungenau sein, der Straßenverlauf kann sich geändert haben, neue Straßen können hinzugekommen sein, etc. Wenn nun bereits fehlerhafte, also etwas ungenaue rechnerische Positionsdaten bzw. Trajektoriedaten der Fahrzeugbewegung verwendet werden, und anhand diesen unter Verwendung ebenfalls nicht zwingend exakter Wegstrecken- oder Kartendaten ausgewählt werden, ergibt sich zwangsläufig, dass auch die ermittelten Navigationsdaten fehlerbehaftet sind. Werden nun diese fehlerbehafteten Navigationsdaten der Steuerung beispielsweise des Automatikgetriebes oder der ACC-Steuerung etc. zugrunde gelegt, ergibt sich zwangsläufig eine fehlerbehaftete Steuerung, da ungenaue Navigationsdaten, die möglicherweise so ungenau sind, dass sie der Komponentensteuerung überhaupt nicht zugrunde gelegt werden dürfen, dennoch verwendet werden.

Der Erfindung liegt damit das Problem zugrunde, eine Möglichkeit anzugeben, die sicherstellt, dass eine Betriebs- oder Funktionskomponente nur dann auf Basis rechnerisch ermittelter Navigationsdaten gesteuert wird, wenn diese Daten auch hinreichend zuverlässig und fehlerfrei sind.

Zur Lösung dieses Problems ist bei einem Verfahren der eingangs genannten Art erfindungsgemäß vorgesehen, dass bei nicht möglicher Ermittlung aktueller Positionsdaten über Satelliteninformationssignale anhand der zuletzt ermittelten Positionsdaten und anhand von Betriebsparametern des Kraftfahrzeugs und/oder früheren Satelliteninformationssignalen ermittelten Trajektoriedaten rechnerisch Positionsdaten ermittelt werden, die mit vorhandenen, den Straßenverlauf beschreibenden Wegstreckendaten die Übereinstimmung der Daten qualifizierend verglichen werden, wobei die Steuerung der Betriebs- oder Funktionskomponente in Abhängigkeit des qualifizierenden Übereinstimmungsvergleichs erfolgt.

Die Ausgangssituation ist die, dass mangels Kommunikation mit einer hinreichenden Anzahl an Satelliten eine exakte Positionsdatenbestimmung in der üblichen Form nicht möglich ist. Es erfolgt in diesem Fall eine rechnerische Ermittlung anhand der zuletzt ermittelten Positionsdaten, also der Positionsdaten, die zuletzt ermittelt wurden, als noch eine korrekte Satellitenkommunikation gegeben war. Neben diesen "früheren Positionsdaten" werden ferner Trajektoriedaten rechnerisch ermittelt, die die Fahrzeugbewegung beschreiben. Hierzu wird auf Betriebsparameter des Kraftfahrzeugs wie beispielsweise Lenkmittel, Raddrehzahl etc. zurückgegriffen, wie auch frühere Satelliteninformationssignale, die innerhalb eines vorgegebenen zurückliegenden Zeitraums (z. B. mehrere 10 Sekunden) bei korrekter Satellitenkommunikation ermittelt wurden, berücksichtigt werden. Anhand der letzten ermittelten Positionsdaten sowie dieser ermittelten Trajektoriedaten werden nun rechnerische Positionsdaten ermittelt. Diese werden mit vorhandenen, den Straßenverlauf beschreibenden Wegstreckendaten verglichen, wobei die Übereinstimmung der Positionsdaten mit den Wegstreckendaten qualifizierend bestimmt wird. Das heißt, es wird quasi eine Plausibilitätsprüfung dahingehend vorgenommen, ob die ermittelten rechnerischen Positionsdaten in einem ausreichenden Maß mit den Wegstreckendaten aus dem Navigationssystem-Datensatz der CD oder DVD übereinstimmen. Ergibt dieser Vergleich, dass die Positionsdaten eine Position beschreiben, die tatsächlich auf einer Straße, die plausibel befahren wird, liegt, so kann von einer hinreichenden Übereinstimmung und damit einer hinreichenden Genauigkeit der rechnerisch ermittelten Positionsdaten ausgegangen werden, das heißt, das "Matching" aus rechnerisch ermittelten Positionsdaten und Wegstreckendaten ist ausreichend gut. In diesem Fall wurde also verifiziert, dass die rechnerischen Positionsdaten qualitativ gut genug sind, um auf ihrer Basis weiterzuarbeiten, mithin einen vollständigen Navigationsdatensatz zu ermitteln und der Steuerung der Funktions- oder Betriebskomponente zugrunde zu legen. Ergibt sich jedoch im Rahmen des Vergleichs der rechnerischen Positionsdaten mit den Wegstreckendaten, dass die Positionsdaten am Rande einer Straße oder neben der Straße, die als plausibel befahren angesehen wird, liegen, so ergibt sich nur ein geringer qualitativer Übereinstimmungsgrad. Es ist also davon auszugehen, dass die rechnerisch ermittelten Positionsdaten doch beachtlich fehlerhaft sind bzw., dass bei einer Ermittlung eines vollständigen Navigationsdatensatzes (enthaltend eben die rechnerischen Positionsdaten und weitere Attributsdaten wie eingangs beschrieben) dieser hinreichend fehlerbehaftet ist. Ein solcher fehlerbehafteter Navigationsdatenblock darf der Komponentensteuerung nicht zugrunde gelegt werden, da dieser Steuervorgang nicht der Realität, also der tatsächlichen Fahrsituation entspräche. Das heißt, der qualitative Übereinstimmungsvergleich zeigt an, dass die ermittelten Positionsdaten qualitativ minderwertig sind. Würden diese Daten beispielsweise zur Steuerung des Automatikgetriebe-Schaltvorgangs verwendet, so käme es gegebenenfalls zu einem Schaltvorgang, der in Anbetracht der gegebenen Fahrsituation nicht erfolgen soll oder darf, was mithin zu einer Gefahrensituation etc. führen kann, das heißt, der Fahrbetrieb kann sich in solchen Fällen sogar noch verschlechtern.

Demgegenüber lässt nun das erfindungsgemäße Verfahren einen echten Qualitäts- oder Plausibilitätsvergleich dahingehend zu, zu ermitteln, wie qualitativ richtig die ermittelten Positionsdaten und basierend auf diesen die gegebenenfalls ermittelten Navigationsdaten sind. Denn über den Vergleich kann ein Maßstab definiert werden, der die Datenqualität beschreibt. Je ungenauer die ermittelten Positionsdaten sind, die anhand der zuletzt ermittelten korrekten Positionsdaten und anhand der rechnerisch ermittelten Trajektoriedaten bestimmt werden, um so geringer ist das Datenqualitätsmaß, das im Rahmen des Übereinstimmungsvergleichs ermittelt wird. Je schlechter die Datenqualität ist, um so eher ist auszuschließen, dass anhand dieser Daten ein Steuerungseingriff erfolgt, was beim erfindungsgemäßen Verfahren ohne weiteres möglich ist, als der qualifizierende Übereinstimmungsvergleich das ausschlaggebende Kriterium für die nachfolgende Steuerung auf Basis der rechnerisch ermittelten Positionsdaten bzw. der daraus bestimmten Navigationsdaten ist.

Eine zweckmäßige Weiterbildung der Erfindung sieht vor, dass anhand des Vergleichs ein diesen qualitativ beschreibendes Informationsdatum zusammen mit den Navigationsdaten an die Betriebs- oder Funktionskomponente übertragen wird, welche in Abhängigkeit des Informationsdatums die Qualität der Navigationsdaten bestimmt und in Abhängigkeit des Bestimmungsergebnisses die Navigationsdaten der weiteren Steuerung zugrunde legt oder nicht. Gemäß dieser Erfindungsausgestaltung wird also ein die Qualität des Vergleichs, letztlich also die Qualität der Positionsdaten und der anhand dieser ermittelten Navigationsdaten beschreibende Information ermittelt. Diese Information wird nun zusammen mit dem vollständigen Navigationsdatenblock an die Betriebs- oder Funktionskomponente, also beispielsweise das Getriebesteuergerät, übertragen. Dieses erfasst nun das Qualitäts-Informationsdatum und kann anhand dessen erkennen, wie gut bzw. wie richtig die ermittelten Navigationsdaten sind. In Abhängigkeit der Datenqualität kann dann das Steuergerät der Betriebs- oder Funktionskomponente selbständig bestimmen, ob es die übertragenen Navigationsdaten der weiteren Steuerung zugrunde legt oder nicht.

Dabei kann die Art der Verwertung der Navigationsdaten in Abhängigkeit des Qualitäts-Informationsdatums durchaus verschiedener Natur sein. Es ist z. B. denkbar, dass bei einer Navigationsdatenqualität, die ein bestimmtes Mindestmaß übersteigt, die Daten vollständig der Komponentensteuerung zugrunde gelegt werden, wohingegen Navigationsdaten, die das Mindestmaß, also einen Schwellwert unterschreiten, grundsätzlich nicht weiter verarbeitet werden. Denkbar ist es aber auch, dass in Abhängigkeit des Informationssignals die Navigationsdaten gewichtet werden. Ist die Datenqualität schlecht, kann die Auswertung der Navigationsdaten anders, z. B. mit schwächerem Einfluss erfolgen oder die Navigationssystemdaten werden bei äußerst schlechter Qualität gar nicht mehr ausgewertet. Umgekehrt können bei sehr verlässlichen Daten diese einen gewichtigeren Einfluss auf die nachfolgende Steuerung haben. Auch können weitere der Steuerung zugrunde zu legende Daten in Abhängigkeit des Informationsdatums gewichtet werden. So können beispielsweise bei qualitativ hochwertigen Navigationsdaten andere, widersprechende Informationen, die beispielsweise dem Getriebesteuergerät vorliegen, nicht oder mit einem geringeren Einfluss berücksichtigt werden.

Insgesamt erlaubt es das erfindungsgemäße Verfahren in Verbindung mit der Ermittlung eines das Qualitätsmaß der bestimmten Navigationsdaten angebenden Informationsdatums, das zusammen mit den Navigationsdaten an die Betriebs- oder Funktionskomponente übertragen wird, den tatsächlichen Steuerbetrieb einer Betriebs- oder Funktionskomponente in Abhängigkeit der tatsächlichen Datenqualität vorzunehmen. Bei Daten niedriger Qualität können negative Auswirkungen in den auswertenden Komponenten wie beispielsweise dem Automatikgetriebe vermieden werden. Dadurch kann die Sicherheit und der Komfort erhöht werden. Bei Daten hoher Qualität können die Auswirkungen in den auswertenden Komponenten wie beispielsweise dem Automatikgetriebe gestärkt werden. Dadurch kann der Nutzen weiter erhöht werden, verglichen mit einer den Fehlerfall einschließenden neutralen Auswertung, mithin einer Nichtberücksichtigung im Falle einer fehlerhaften Satellitenkommunikation ermittelten Navigationsdaten. Bei Daten hoher Qualität können weiterhin falsche Informationen anderer Quellen, sei es über eine entsprechende Sensorik erfasste Informationen oder Informationen anderer Steuergeräte wie die Motorsteuergeräte etc. gegebenenfalls als solche erkannt werden und die Steuerung entsprechend ausgelegt werden.

Neben dem erfindungsgemäßen Verfahren betrifft die Erfindung ferner ein Kraftfahrzeug, umfassend ein Navigationssystem sowie wenigstens eine in Abhängigkeit der vom Navigationssystem ermittelten Positionsdaten gesteuerte Betriebs- oder Funktionskomponente, ausgebildet zur Durchführung des Verfahrens der beschriebenen Art.

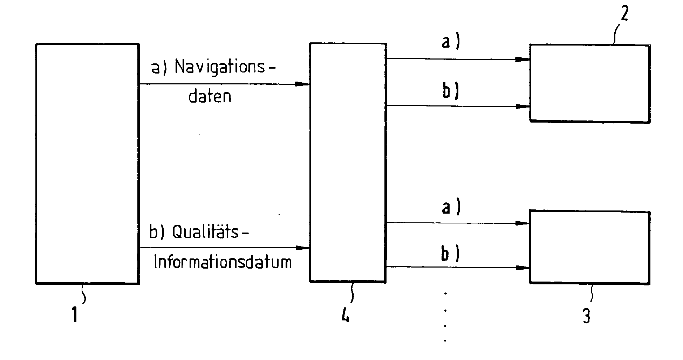

Weitere Vorteile, Merkmale und Einzelheiten der Erfindung ergeben sich aus dem im folgenden beschriebenen Ausführungsbeispiel sowie anhand der Zeichnung. Diese zeigt als reine Prinzipdarstellung Komponenten eines erfindungsgemäßen Kraftfahrzeugs, die im Rahmen der Durchführung des erfindungsgemäßen Verfahrens benötigt werden, wobei anhand der Prinzipdarstellung das Verfahren nachfolgend erläutert wird.

Gezeigt ist ein Navigationssystem 1. Ein solches Navigationssystem ist in seiner Funktionsweise sowie in seinem Software- und Hardwareaufbau hinreichend bekannt und muss nicht näher beschrieben werden. Es dient zum einen der Ermittlung von Positionsdaten, wozu es mit mindestens drei nicht näher gezeigten Satelliten kommuniziert. Das Navigationssystem umfasst des Weiteren einen Navigationssystem-Datensatz umfassend Wegstreckendaten, die üblicherweise dort auf einem Datenträger wie einer CD oder einer DVD vorhanden sind. Anhand der kontinuierlich und aktuell ermittelten Positionsdaten kann nun unter Verwendung der Wegstreckendaten in an sich bekannter Weise dem Fahrer zur Fahrerführung die Wegstrecke angezeigt werden.

Die Navigationsdaten dienen aber des Weiteren auch zur Steuerung verschiedener Betriebs- oder Funktionskomponenten, im gezeigten Beispiel sei hier exemplarisch ein Automatikgetriebe 2 sowie ein Längsführungssystem (ACC-System) 3 dargestellt, die beide anhand oder in Abhängigkeit der Navigationsdaten gesteuert werden. So kann beispielsweise in Abhängigkeit der Navigationsdaten der Schaltvorgang des Automatikgetriebes, gesteuert über das die Navigationsdaten empfangenden Getriebesteuergerät, optimiert gestaltet werden, das Längsführungssystem kann in seiner Funktionalität ebenfalls beeinflusst werden, wenn ihm anhand der Navigationsdaten genaue Kenntnisse des Wegstreckenverlaufs und etwaige Attributdaten dazu wie Geschwindigkeitsbegrenzungen etc. bekannt sind.

Grundsätzlich ermittelt das Navigationssystem die Positionsdaten bei Kommunikation mit wenigstens drei Satelliten. Es kann aber Situationen geben, in denen die Satellitenkommunikation gestört ist oder nicht genügend Satelliten erreicht werden, weshalb die Positionsdaten nicht aktuell ermittelt werden können. Zu diesem Zweck werden nun anhand der zuletzt ermittelten Positionsdaten, die bei korrekter Satellitenkommunikation bestimmt wurden, sowie anhand von rechnerisch ermittelten Trajektoriedaten, die anhand von Kraftfahrzeug-Betriebsparametern wie beispielsweise Lenkwinkel, Raddrehzahl etc. und/oder früheren Satelliteninformationssignalen ermittelt werden, rechnerisch Positionsdaten bestimmt. Die dabei verwendeten Satelliteninformationssignale lassen die Ermittlung früherer aktueller Positionsdaten zu bzw. diese werden unmittelbar verwendet, um gegebenenfalls in Verbindung mit den Lenkwinkel- oder Raddrehzahldaten den Fahrweg des Kraftfahrzeugs, den das Fahrzeug in Zukunft nehmen wird, abzuschätzen. In jedem Fall werden nun rechnerische Positionsdaten bestimmt.

Im nächsten Schritt werden nun diese rechnerischen Positionsdaten mit den Wegstreckendaten aus dem Datenspeicher verglichen. Es wird also überprüft, wie weitgehend die Positionsdaten und die Wegstreckendaten übereinstimmen bzw. wie plausibel beide "gematcht" werden können. Das System prüft letztlich, ob die rechnerischen Positionsdaten einen Punkt beschreiben, der tatsächlich auf einer plausibel im Moment befahrenen Straße liegen, ob ein Versatz gegeben ist, etc. In jedem Fall wird zu den ermittelten Positionsdaten ein vollständiger Navigationsdatensatz bestimmt, der neben den Positionsdaten auch weitere Daten wie Informationen zu Geschwindigkeitsbegrenzungsvorgaben, sich nähernde Baustellen etc., soweit diese im Datenspeicher vorhanden sind, enthält.

In Abhängigkeit des gegebenen Vergleichs, wie gut oder schlecht also die rechnerischen Positionsdaten und die Wegstreckendaten übereinstimmen, wird des Weiteren ein Qualitäts-Informationsdatum ermittelt, also ein Parameter oder Wert, der den Grad der Übereinstimmung angibt, mithin also die Qualität der rechnerischen ermittelten Positionsdaten und damit auch der Qualität des insgesamt ermittelten Navigationsdatensatzes beschreibt. Je besser beide Daten gematcht sind, umso qualitativ hochwertiger sind die Navigationsdaten, und umgekehrt.

Vom Navigationssystem 1 werden nun die Navigationsdaten, in der Figur mit a) gekennzeichnet, sowie das Qualitäts-Informationsdatum, in der Figur mit b) gekennzeichnet, an ein Gateway 4 übertragen, das an ein fahrzeugeigenes Bussystem, z. B. CAN-Bus oder MOST-Bus angeschlossen ist, übertragen. Von dort aus werden die Navigationsdaten a) und das Qualitäts-Informationsdatum b) an die jeweilige Betriebs- oder Funktionskomponente, hier das Automatikgetriebe 2 bzw. das Längsführungssystem 3, übertragen. Dort wertet nun das jeweilige Steuergerät das Informationsdatum aus um zu ermitteln, wie plausibel bzw. "richtig" die übertragenen Navigationsdaten sind. Je qualitativ hochwertiger die Navigationsdaten sind, umso eher werden sie der nachfolgenden Steuerung des Getriebes oder des Längsführungssystems zugrunde gelegt, je schlechter sie sind, umso unwahrscheinlicher bzw. umso weniger stark gewichtet gehen sie, wenn überhaupt, in die nachfolgende Steuerung ein.

In jedem Fall erhält die jeweilige Betriebs- oder Funktionskomponente anhand des Qualitäts-Informationsdatums eine fundierte Information dahingehend, wie plausibel bzw. qualitativ richtig die rechnerisch ermittelten bzw. auf Basis von rechnerisch ermittelten Positionsdaten bestimmten übertragenen Navigationsdaten sind, so dass das jeweilige Steuergerät selbst entscheiden kann, inwieweit es diese Navigationsdaten im Rahmen der fortgesetzten Steuerung berücksichtigt oder nicht. Je nach Qualitätsgrad können die Navigationsdaten unterschiedlich stark gewichtet eingehen, es ist auch möglich, dass bei Überschreiten eines bestimmten Schwell- oder Vergleichswerts die Navigationsdaten vollständig, also zu 100% berücksichtigt werden, während sie bei Unterschreitung überhaupt nicht berücksichtigt werden etc. Hier sind unterschiedliche Verarbeitungsstrategien denkbar, die letztlich auch davon abhängen, in welcher Weise die Navigationsdaten in die Komponentensteuerung eingehen bzw. um welche Komponente es sich handelt.

## Patentansprüche

1. Verfahren zur Steuerung einer Betriebs- oder Funktionskomponente eines Kraftfahrzeugs anhand von über ein Navigationssystem ermittelten Navigationsdaten umfassend Positionsdaten,
**dadurch gekennzeichnet,**
**dass** bei nicht möglicher Ermittlung aktueller Positionsdaten über Satelliteninformationssignale anhand der zuletzt ermittelten Positionsdaten und anhand von Betriebsparametern des Kraftfahrzeugs und/oder früheren Satelliteninformationssignalen ermittelten Trajektoriedaten rechnerisch Positionsdaten ermittelt werden, die mit vorhandenen, den Straßenverlauf beschreibenden Wegstreckendaten die Übereinstimmung der Daten qualifizierend verglichen werden, wobei die Steuerung der Betriebs- oder Funktionskomponente in Abhängigkeit des qualifizierenden Übereinstimmungsvergleichs erfolgt.

2. Verfahren nach Anspruch 1,
**dadurch gekennzeichnet,**
**dass** anhand des Vergleichs ein diesen qualitativ beschreibendes Informationsdatum zusammen mit den Navigationsdaten an die Betriebs- oder Funktionskomponente übertragen wird, welche in Abhängigkeit des Informationsdatums die Qualität der Navigationsdaten bestimmt und in Abhängigkeit des Bestimmungsergebnisses die Navigationsdaten der weiteren Steuerung zugrunde legt oder nicht.

3. Verfahren nach Anspruch 2,
**dadurch gekennzeichnet,**
**dass** in Abhängigkeit des Informationsdatums die Navigationsdaten oder weitere der Steuerung zugrunde zu legenden Daten gewichtet werden.

4. Kraftfahrzeug, umfassend ein Navigationssystem sowie wenigstens eine in Abhängigkeit der vom Navigationssystem ermittelten Positionsdaten gesteuerte Betriebs- oder Funktionskomponente, ausgebildet zur Durchführung des Verfahrens nach einem der vorangehenden Ansprüche.
